Europäisches Patentamt

European Patent Office

Office européen des brevets

(11) Numéro de publication: **0 024 270**
**B1**

(12) **FASCICULE DE BREVET EUROPEEN**

(45) Date de publication du fascicule du brevet: **10.10.84**

(51) Int. Cl.³: **C 08 J 5/18, C 08 L 23/06**

(21) Numéro de dépôt: **80870038.9**

(22) Date de dépôt: **06.08.80**

(54) **Film d'emballage thermoscellable à joint pelable, son procédé de préparation et emballages.**

(30) Priorité: **08.08.79 GB 7927646**

(43) Date de publication de la demande:
**25.02.81 Bulletin 81/08**

(45) Mention de la délivrance du brevet:
**10.10.84 Bulletin 84/41**

(84) Etats contractants désignés:
**AT BE CH DE FR GB IT LI LU NL SE**

(56) Documents cités:
**BE-A- 657 210**
**FR-A-2 012 460**
**FR-A-2 137 984**
**FR-A-2 233 163**

**Le dossier contient des informations techniques présentées postérieurement au dépôt de la demande et ne figurant pas dans le présent fascicule.**

(73) Titulaire: **U C B, S.A.**
**4, Chaussée de Charleroi**
**B-1060 Bruxelles (BE)**

(72) Inventeur: **Bontinck, Walter**
**30, Engelhoekstraat**
**B-9852 Sint-Martens-Leerne (BE)**
Inventeur: **D'Hondt, Marc**
**210(d), Heirweg-Oudenaerde**
**B-9730 Nazareth (BE)**
Inventeur: **Jacobs, Roland**
**39, Schoorstraat**
**B-9200 Wetteren (BE)**

(74) Mandataire: **Vanderborght, Henri et al**
**U C B, S.A. Département D.T.B. 33, rue d'Anderlecht**
**B-1620 Drogenbos (BE)**

Courier Press, Leamington Spa, England.

# 0 024 270

## Description

La présente invention se rapporte à un film d'emballage thermoscellable produisant un joint pelable, tant sur des films thermoscellables que sur des films que ne le sont pas et, en particulier, sur des films de polyester, de chlorure de polyvinyle, de polyamide et de polyacrylonitrile. Elle concerne également un procédé de préparation dudit film à joint pelable ainsi que les emballages réalisés à partir de ou comprenant un tel film.

A l'heure actuelle, on utilise de plus en plus des emballages en films souples, transparents ou opaques pour la protection des produits alimentaires, pharmaceutiques et cosmétiques, des jouets, des outils et d'objets similaires tels que des instruments chirurgicaux.

La fermeture de ces emballages est effectuée le plus souvent par thermoscellage, en profitant de la thermoscellabilité des films d'emballage en polyéthylène, en polypropylène, en cellulose vernie, etc.

Toutefois, lorsqu'on réalise la fermeture par thermoscellage de deux films thermoscellables fabriqués à partir de la même matière plastique, par exemple deux films de polyéthylène basse densité, l'ouverture des emballages constitués par ces films, nécessite le recours à des instruments tels que ciseaux, couteaux, etc. vu que la résistance mécanique des joints et des films d'emballage est supérieure à la force que l'homme peut normalement exercer pour les ouvrir.

C'est la raison pour laquelle on a déjà proposé diverses méthodes pour fabriquer des emballages possédant des joints de fermeture dont la résistance mécanique est moins élevée. Un joint idéal de cette nature doit présenter une résistance qui d'une part, doit être suffisante pour maintenir l'emballage intact jusqu'au moment où il est ouvert par le consommateur, mais qui d'autre part, doit être suffisamment faible pour permettre une ouverture manuelle de l'emballage sans l'utilisation d'un instrument auxiliare quelconque. En outre, cette overture manuelle doit pouvoir se réaliser sans qu'il ne se produise une déchirure ou une déformation quelconque dans le matériau des films utilisés pour l'établissement du joint. De tels joints sont connus dans la technique de l'emballage sous le nom de "joints pelables".

Il est connu de réaliser des joints pelables par thermoscellage de deux films en matériaux synthétiques différents. Ainsi par exemple, dans le brevet belge n° 742.694, on réalise un emballage fermé par un joint pelable obtenu par thermoscellage d'un film de polyéthylène basse densité et d'un film de polypropylène, la face du film de polyéthylène basse densité scellée à la face du film de polypropylène ayant subi un prétraitement soit à la flamme, soit par décharge corona. L'inconvénient de ce système est qu'il se limite à l'utilisation de deux films spécifiques, qui ne conviennent pas pour toutes les applications possibles d'emballage. Par ailleurs, la demanderesse a observé qu'il n'est pas possible de substituer le film de polypropylène par d'autres films d'emballage tels que par exemple des films de polyester, de chlorure de polyvinyle ou de polyamide, car dans ce cas, on obtient un joint de très faible résistance, voire même pas de joint du tout.

Dans la demande de brevet français n° 2.137.984 au nom de la demanderesse, on propose un film d'emballage thermoscellable qui a la propriété de pouvoir produire un joint pelable lorsqu'il est thermoscellé sur lui-même ou sur des films d'emballage les plus divers, plus particulièrement sur des films de polyéthylène basse ou haute densité, de polypropylène et de polybutène. La résistance mécanique assurant la pelabilité du joint est obtenue par un choix judicieux des constituants polymères entrant dans la composition du film. Cette composition comporte toujours trois, voire même quatre polymères distincts: principalement (1) un polymère oléfinique rigide thermoscellable (A), tel que par exemple un polyéthylène haute densité ou un mélange de celui-ci avec un polyamide 6 ou un chlorure de polyvinyle; (2) un polymère non thermoscellable (B), tel que du polystyrène; (3) du polyéthylène basse densité (maximum 30% en poids) et éventuellement (4) un polymère (D) compatible à la fois avec les polymères (A), (B) et (C). En outre, il est prévu que ce film peut être prétraité superficiellement à la flamme ou par décharge corona pour le rendre imprimable et/ou laminable sur d'autres films. On notera toutefois que dans les exemples de réalisation, les films formateurs de joints pelables n'ont reçu aucun traitement de surface. En outre, dans ces exemples, on mentionne seulement deux compositions très spécifiques qui permettent de réaliser un joint pelable sur les films de polyamide et de chlorure de polyvinyle. Ainsi qu'il ressort de l'exemple 1, pour obtenir un joint pelable sur ces films, il faut choisir spécifiquement la nature et la quantité du polymère (A). Pour obtenir un joint pelable sur la pellicule de polyamide, il faut utiliser obligatoirement une composition contenant un mélange 6/1 de polyéthylène haute densité et de polyamide 6 et pour obtenir un joint pelable sur la pellicule de chlorure de polyvinyle, il faut utiliser obligatoirement une composition contenant un mélange 6/1 de polyéthylène haute densité et de chlorure de polyvinyle, dans les proportions indiquées dans cet exemple. Avec toutes les autres compositions proposées dans cette demande de brevet, on obtient seulement des joints pelables sur des pellicules oléfiniques. Cette demande de brevet n'apporte donc qu'une solution très limitée au problème que la présente invention a pour but de résoudre, c'est-à-dire procurer un film d'emballage capable de produire des joints pelables sur les films de chlorure de polyvinyle, de polyamide, de polyester et de polyacrylonitrile.

Dans la demande de brevet français n° 2.012.460, on décrit la fabrication d'une pellicule synthétique semblable à du papier, par extrusion d'un mélange comprenant 100 parties d'une résine oléfinique, 1 à 100 parties d'au moins une résine additionnelle choisie dans le groupe des résines de

2

# 0 024 270

polystyrène, de polyacétal, de chlorure de polyvinyle, d'acétate de polyvinyle, de polyméthacrylate de méthyle, de polyamides, etc., 10 à 300 parties d'une charge minérale et éventuellement un caoutchouc naturel ou synthétique. Après l'extrusion, la pellicule est soumise à un étirage suivant deux axes, à une température comprise entre 100 et 170°C, de façon à la transformer en une feuille ayant une structure multicellulaire en couches multiples. Cette structure physique particulière confère à la feuille des caractéristiques très semblables à celles du papier. La feuille ainsi obtenue est surtout destinée à servir de support à l'écriture manuelle ou mécanique. C'est pourquoi, il est proposé également de soumettre cette feuille à un traitement de surface, par exemple un traitement électrique, pour améliorer l'aptitude à recevoir l'impression.

A noter que dans les exemples de cette demande de brevet, les pellicules sont préparées exclusivement à partir de polyéthylène haute densité, de polypropylène et de polybutène-1.

Des compositions similaires convenant pour la fabrication d'un papier synthétique sont également décrites dans la demande de brevet français n° 2.233.163. Ces compositions contiennent un mélange de 100 parties en poids de polyéthylène haute densité (densité=0,94 à 0,97 g/cm$^3$) ou de propylène isotactique, de 5 à 100 parties en poids d'un polymère de styrène et éventuellement de 0,5 à 20 parties en poids d'un polymère caoutchouteux. Comme exemples de polymères caoutchouteux, on mentionne exclusivement un copolymère de butadiène et de styrène à structure désordonnée et un copolymère séquencé de butadiène et de styrène comportant un seul chaînon polystyrène associé à un chaînon polybutadiène. Ici également la pellicule est soumise à un étirage biaxial pour conférer à la pellicule des caractéristiques physiques et mécaniques semblables à celles du papier cellulosique.

On observera que ni dans la demande de brevet français n° 2.012.460, ni dans la demande de brevet français n° 2.233.163, il n'est mentionné que la pellicule synthétique préparée est susceptible de se sceller à chaud en produisant un joint pelable, alors que cette pelabilité des joints est la caractéristique essentielle visée dans la présente invention.

Il reste donc intéressant de trouver un film d'emballage qui permettrait de produire un joint pelable non seulement sur des films thermoscellables, mais également et surtout sur des films qui ne le sont pas, c'est-à-dire sur une gamme étendue de films d'emballage comprenant les films de polyester, de chlorure de polyvinyle, de polyamide et de polyacrylonitrile.

En effet, un tel film offrirait un plus grand nombre de possibilités d'applications dans l'industrie de l'emballage.

Il s'agit cependant d'un problème ardu étant donné qu'avec bon nombre de films, on ne parvient pas à réaliser un joint sur les films non-thermoscellables susmentionnés ou seulement un joint dont la résistance mécanique est insuffisante, ce qui a pour conséquence que l'emballage peut s'ouvrir facilement par accident.

En outre, la difficulté est de trouver un film d'emballage qui produit un bon joint pelable. Un joint pelable idéal devrait satisfaire aux exigences suivantes:

(1) sa résistance au pelage doit être de 300 g par cm de largeur de joint au moins et de 750 g par cm de largeur de joint au plus,

(2) il doit pouvoir être rompu à l'interface des films qui le forment sans que se produise une déchirure ou une déformation quelconque dans le matériau de l'un de ces films; en outre, si l'un de ces films est laminé à d'autres matériaux, il ne peut se produire un délaminage simultané dudit laminé,

(3) il doit pouvoir être rompu de manière homogène, c'est-à-dire sans dépôt irrégulier du matériau d'un des films sur la face de l'autre film ayant servi à la formation du joint,

(4) il doit pouvoir être rompu par une simple traction manuelle, sans avancement par saccades,

(5) il doit pouvoir être réalisé par thermoscellage dans une large gamme de températures, la gamme minimale tolérée étant de 20°C,

(6) au besoin, il doit pouvoir résister aux températures et aux pressions utilisées dans les appareils de pasteurisation et de stérilisation.

En outre, le film produisant un joint pelable doit présenter les propriétés physiques courantes d'un film d'emballage, telles que la transparence, la résistance au choc, la souplesse, la résistance à la déchirure, la thermoscellabilité, l'aptitude au laminage, l'imprimabilité avec des encres.

La demanderesse vient présentement de découvrir qu'il est possible de résoudre ce problème en apportant un film d'emballage thermoscellable qui produit un joint pelable qui satisfait aux exigences citées plus haut aux points (1) à (6), non seulement sur des films thermoscellables mais également sur des films qui ne le sont pas et cela grâce au choix approprié des constituants polymères dudit film et aussi, par une modification spécifique de la polarité de la surface de sa face qui forme le joint pelable par thermscellage.

La présente invention a donc pour objet un film d'emballage thermoscellable qui est caractérisé par une composition comprenant:

(a) 55 à 90% en poids d'au moins un polymère d'éthylène choisi parmi du polyéthylène ayant une densité comprise entre 0,91 et 0,93 g/cm$^3$ et un copolymère éthylène-acétate de vinyle contenant au plus 10% en poids d'acétate de vinyle,

(b) 5 à 30% en poids d'un homopolymère de styrène et

3

(c) 5 à 20% en poids d'un copolymère séquencé styrène-butadiène-styrène ou styrène-isoprène-styrène élastomère thermoplastique, et par le fait que l'une des faces du film possède une tension de surface comprise entre 35 et 50 millinewtons par mètre, de préférence entre 37 et 45 millinewtons par mètre.

L'invention a également pour objet un procédé de préparation du film d'emballage thermoscellable précité, caractérisé en ce que l'on soumet à une extrusion une composition comprenant:

(a) 55 à 90% en poids d'au moins un polymère d'éthylène choisi parmi du polyéthylène ayant une densité comprise entre 0,91 et 0,93 g/cm³ et un copolymère éthylène-acétate de vinyle contenant au plus 10% en poids d'acétate de vinyle,

(b) 5 à 30% en poids d'un homopolymère de styrène et

(c) 5 à 20% en poids d'un copolymère séquencé styrène-butadiène-styrène ou styrène-isoprène-styrène élastomère thermoplastique, et en ce que l'on soumet l'une des faces du film ainsi extrudé à un prétraitement par décharge corona avec une intensité telle que sa tension de surface soit comprise entre 35 et 50 millinewtons par mètre, de préférence entre 37 et 45 millinewtons par mètre.

L'invention a également pour objet les emballages réaslisés à partir du ou comprenant le film précité.

Le constituant (a) du film conforme à l'invention est soit un polyéthylène ayant une densité comprise entre 0,91 et 0,93 g/cm³, c'est-à-dire un polyéthylène basse densité, soit un copolymère éthylène-acétate de vinyle contenant au plus 10% en poids, de préférence 4 à 8% en poids d'acétate de vinyle. Les valeurs indiquées pour la densité du polyéthylène sont déterminées selon la norme ASTM D-792 et D-1505. La quantité du constituant (a) entrant dans la composition du film représente 55 à 90% en poids, de préférence 65 à 85% en poids par rapport au poids total des polymères présents. Il s'avère que la résistance du joint obtenu par thermoscellage d'un film préparé exclusivement à partir du constituant (a) sur lui-même ou sur certains autres films thermoscellables est beaucoup trop élevée pour que le joint soit pelable, cette résistance atteignant normalement au moins 800 g/cm. D'un autre côté, on a observé que la résistance mécanique du joint est insuffisante et peut même descendre en dessous de 100 g/cm de largeur de joint sur les films de polyester, de chlorure de polyvinyle, de polyamide ou de polyacrylonitrile et ce, même si la face du film préparé exclusivement à partir du constituant (a) et qui est destinée à la formation du joint, est prétraitée par décharge corona.

Le constituant (b) du film est un homopolymère de styrène. Sa présence est obligatoire dans la composition du film conforme à l'invention en une quantité de 5 à 30% en poids, de préférence de 10 à 20% en poids par rapport au poids total des polymères présents. En effet, ce constituant agit sur la pelabilité du joint.

Le constituant (c) du film est un copolymère séquencé styrène-butadiène-styrène ou styrène-isoprène-styrène élastomère thermoplastique. Ces polymères séquences contiennent, de préférence, 15 à 40% en poids d'unités de styrène et 60 à 85% en poids d'unités de butadiène ou d'isoprène.

Le constituant (c) améliore la compatibilité des constituants (a) et (b) entre eux, ce qui se traduit par une meilleure homogénéisation et une meilleure extrudabilité de la composition. De ce fait, ce constituant permet l'obtention d'un film ayant des propriétés mécaniques améliorées. De plus, ce constituant agit très favorablement sur les qualités des joints pelables obtenus. C'est pourquoi, la composition du film conforme à l'invention contient de 5 à 20% en poids, de préférence de 5 à 15% en poids du constituant (c) par rapport au poids total des polymères présents.

Un film préparé à partir des constituants (a), (b) et (c) ne fournit cependant pas de joints pelables sur les films de polyester, de chlorure de polyvinyle, de polyamide ou de polyacrylonitrile. En effet, ainsi qu'il est démontré dans l'exemple 2 ci-après, les valeurs de la résistance des joints obtenus sont inférieures à 100 g/cm de largeur de joint.

On a pu constater avec surprise qu'en soumettant la face du film qui est destinée à la formation du joint, à un prétraitement par décharge corona avec une intensité déterminée, il est possible d'obtenir d'excellents joints pelables qui satisfont aux exigences citées plus haut aux points (1) à (6), non seulement sur le même film ainsi que sur d'autres films d'emballage thermoscellables, mais également sur des films d'emballage qui ne sont pas thermoscellables et, en particulier, sur des films de polyester, de chlorure de polyvinyle, de polyamide et de polyacrylonitrile. Ce résultat est étonnant et inattendu.

Le prétraitement utilisé pour la préparation du film conforme à l'invention est de préférence le traitement par décharge corona couramment utilisé dans la technique en vue de rendre les surfaces des films de polyéthylène et d'autres matières plastiques, réceptives aux encres d'imprimerie ou laminables sur d'autres films. Il est appliqué conformément à l'invention sur la face du film qui est destinée à la formation du joint pelable et qui sera en contact avec la face de l'autre film utilisé à cet effet. En outre, l'intensité de ce prétraitement doit être choisie de manière telle que la face du film destinée à la formation du joint pelable présente une tension de surface comprise entre 35 et 50 millinewtons par mètre, de préférence entre 37 et 45 millinewtons par mètre. En fait, un film possédant la composition chimique d'un film conforme à l'invention, mais qui n'a subi aucun prétraitement, possède généralement une tension de surface d'environ 32 millinewtons par mètre. C'est la raison pour laquelle il doit subir un prétraitement par décharge corona avec une intensité suffisante pour que sa face destinée à la formation du joint pelable présente une tension de surface comprise entre 35 et 50 millinewtons par mètre.

4

Si la tension de surface est inférieure à 35 millinewtons par mètre, la résistance mécanique du joint formé, par exemple sur un film de chlorure de polyvinyle ou de polyester, est insuffisante pour assurer l'étanchéité de l'emballage jusqu'au moment où il est ouvert par le consommateur. D'un autre côté, il n'y a aucun intérêt à dépasser une tension de surface de 50 millinewtons par mètre, car pour obtenir des tensions de surface plus élevées il faudrait appliquer un prétraitement d'une intensité si grande que l'opération devient économiquement inacceptable et que l'on risque au surplus de détériorer le film. Il faut donc que la face du film destinée à la formation du joint présente une tension de surface située dans l'intervalle précité pour obtenir une résistance mécanique assurant la pelabilité du joint formé sur un film de chlorure de polyvinyle, de polyester, de polyamide ou de polyacrylonitrile.

Il est bien connu de l'homme de l'art que l'intensité du traitement par décharge corona dépend notamment de la puissance en watts fournie aux électrodes, de la vitesse de déplacement du film, de l'épaisseur dudit film et de la distance comprise entre les électrodes. On peut donc régler les paramètres précités de manière à obtenir l'intensité critique assurant les tensions de surface souhaitées.

Pour la préparation du film conforme à l'invention, les constituants polymères (a), (b) et (c) sont utilisés sous forme de poudres ou de granulés.

La composition du film conforme à l'invention peut être constituée exclusivement par les constituants (a), (b) et (c) précités, mais elle peut comporter en outre les charges et/ou les adjuvants utilisés couramment dans la fabrication de films d'emballage.

Des charges pourront par exemple être ajoutées en vue d'opacifier le film et/ou de lui conférer une dureté supplémentaire. Le talc, le dioxyde de titane, le kaolin, les zéolites, la silice, le mica micronisé, l'oxyde de zinc, l'oxyde d'aluminium, le carbonate de calcium naturel ou précipité, le carbonate de magnésium, la barytine, etc., sont des exemples représentatifs des charges pouvant être ajoutées. Elles se présentent sous forme de poudres dont la dimension de particule ne doit pas être supérieure à 50 micromètres et elles peuvent être ajoutées à la composition du film en des quantités variant de 0% à environ 10% en poids par rapport au poids total des constituants polymères (a), (b) et (c).

Les adjuvants comprennent des stabilisants thermiques comme la diphénylthiourée, l'alpha-phénylindol, le palmitate et/ou stéarate de baryum, de cadmium et/ou de zinc, le phosphite de tris-nonylphényle, etc., des antioxydants comme le 4,4'-thio-bis-(6-t.butyl-métacrésol), le 4,4'-méthylène-bis-(2,6-di-t.butylphénol), les hydroxytoluènes butylés, etc., des agents de blanchiment optique tels que les dérivés sulfonés du stilbène, des colorants organiques comme les phtalocyanines, les colorants azoïques, les indanthrènes chlorés, etc., des pigments minéraux comme le chromate de zinc, le sulfure de cadmium, l'oxyde de fer, des agents antistatiques, les lubrifiants comme le stéarate de magnésium ou de calcium, l'huile de paraffine, etc. Ces adjuvants peuvent être ajoutés à la composition du film en une quantité de 0 à environ 5% en poids par rapport au poids total des constituants polymères (a), (b) et (c).

En vue de la fabrication du film à joint pelable conforme à l'invention, les polymères et éventuellement les charges et les adjuvants sont homogénéisés entre eux à la température ordinaire dans un mélangeur de construction conventionnelle, de préférence du type rotatif ordinaire.

Un mode approprié d'homogénéisation de ce mélange est d'ajouter les polymères avec un lubrifiant tel qu'une huile paraffinique dans le mélangeur, puis d'ajouter au mélange homogénéisé ainsi obtenu les charges et les adjuvants pulvérulents.

Une autre manière d'opérer est de préparer des mélanges-maîtres ("master-batch") avec au moins un des polymères, les charges et les adjuvants, puis d'homogénéiser les mélanges-maîtres avec les polymères restants.

Le mélange homogène ainsi obtenu est soumis à une extrusion dans un appareil de conception classique, dans lequel le mélange est porté à une température atteignant au plus 290°C.

L'extrudeuse pourra comporter une ou plusieurs vis d'extrusion; il importe seulement en l'occurrence que la composition obtenue soit homogène à la sortie de la filière.

Chose bien connue de l'homme de métier, les propriétés mécaniques pourront encore être modifiées suivant que l'extrusion se fait à travers une filière plate ou par la technique de l'extrusion avec soufflage. Dans ce dernier cas, la vitesse de refroidissement et le taux de soufflage pourront également être modifiés en fonction des desiderata.

A la sortie de l'extrudeuse, la face du film obtenu destinée à la formation du joint pelable est soumise à un prétraitement par décharge corona avec une intensité telle que la tension de surface soit comprise entre 35 et 50 millinewtons par mètre, de préférence entre 37 et 45 millinewtons par mètre.

Le film ainsi obtenu peut être utilisé tel quel comme matériau d'emballage. Toutefois, on l'utilise de préférence sous la forme d'un laminé avec un ou plusieurs autres films en matière plastique de nature diverse, avec du papier, des feuilles d'aluminium, etc. Pour la formation de ces laminés, on utilise les techniques bien connues de laminage par contre-collage, par extrusion-laminage ou par coextrusion.

Avant de procéder au laminage, on peut, le cas échéant, également faire subir à la face du film conforme à l'invention qui est opposée à celle destinée à la formation du joint pelable, un prétraitement à la flamme ou par décharge corona, pour améliorer de manière connue en soi son adhérence aux autres matériaux avec lesquels il est laminé

Il est à noter cependant que, dans le cas où le film conforme à l'invention est utilisé sous la forme

5

d'un laminé avec d'autres matériaux, il n'est pas indispensable que la face du film destinée à la formation du joint pelable soit prétraitée avant d'être laminée aux autres matériaux. Dans ce cas, on peut évidemment d'abord préparer un laminé, par exemple par coextrusion, à partir d'un premier film ayant la composition chimique d'un film conforme à l'invention et d'un ou de plusieurs autres films de nature différente et ensuite, soumettre la face du premier film destinée à la formation du joint pelable à un prétraitement par décharge corona en vue de lui conférer la tension de surface nécessaire pour assurer la pelabilité du joint.

Les exemples qui suivent illustrent l'invention sans la limiter.

Dans ces exemples, les films soumis aux essais sont utilisés sous la forme d'un laminé avec un film de polyester. Il est évident que les mêmes résultats peuvent être obtenus avec des films non laminés ou laminés sur d'autres matériaux.

Par ailleurs, dans ces exemples, on utilise un appareil du type MULTIVAC pour former les joints par thermoscellage.

Enfin, les forces de pelage sont mesurées, selon des méthodes classiques, avec un appareil de traction électronique; les valeurs indiquées pour les indices de fluidité (M.I.) des polymères sont déterminées selon la norme ASTM D-1238 et exprimées en grammes de polymère extrudé en 10 minutes à la température de 190°C.

Quant aux tensions de surface, elles ont été mesurées selon la méthode RC 359 décrite dans TAPPI, (53, juin 1970, n°6, p. 1165—66).

Exemple 1.

On montre dans cet exemple que la composition du film conforme à l'invention doit contenir les constituants polymères (a), (b) et (c) pour assurer l'obtention d'un joint pelable sur un film de chlorure de polyvinyle, de polyester et de polyamide.

a) On prépare, par extrusion-soufflage, un film exclusivement en un polyéthylène ayant une densité de 0,923 g/cm$^3$ et un indice de fluidité de 0,3 (Lacqtène 1003 FE). Ce film possède une tension de surface de 29 mN/m. On soumet la face du film destinée à la formation du joint à un prétraitement par décharge corona. On obtient ainsi un film de polyéthylène basse densité dont la face traitée possède une tension de surface de 40 mN/m. Ce film est dénommé ci-après "film A".

b) On prépare aussi, par extrusion-soufflage, un film ayant la composition suivante:

65% en poids d'un polyéthylène ayant une densité de 0,923 g/cm$^3$ et un indice de fluidité de 0,3 (Lacqtène 1003 FE);
20% en poids d'un polystyrène de qualité "cristal", ayant un indice de fluidité de 0,6 (Lacqrène 126B);
15% en poids d'un copolymère séquence styrène-butadiène-styrène contenant 70% en poids d'unités de butadiène et 30% en poids d'unités de styrène et possédant un indice de fluidité de 0,5 (Solprène 416 de PHILLIPS PETROLEUM C°).

On soumet également la face de ce film destinée à la formation du joint, à un prétraitement par décharge corona. On lui confère ainsi une tension de surface de 38 mN/m. Ce film est dénommé ci-après "film B".

c) On prépare encore, par extrusion-soufflage, un film ayant la composition suivante:

67% en poids d'un polyéthylène ayant une densité de 0,923 g/cm$^3$ et un indice de fluidité de 0,3 (Lacqtène 1003 FE);
18% en poids d'un polystyrène de qualité "cristal", ayant un indice de fluidité de 0,6 (Lacqrène 126 B);
15% en poids d'un copolymère séquencé styrène-isoprène-styrène contenant 85% en poids d'unités d'isoprène et 15% en poids d'unités de styrène et possédant un indice de fluidité de 0,5 (Solprène 423 de PHILLIPS PETROLEUM C°).

Ce film est prétraité de la même manière que les films précédents pour que la face destinée à la formation du joint ait une tension de surface de 38 mN/m. Ce film est dénommé ci-après "film C".

Les films A, B et C ainsi obtenus ont une épaisseur de 50 μm.

On lamine, de manière connue en soi, un film de polyester d'une épaisseur de 12 μm sur la face, opposée à la face prétraitée comme décrit ci-dessus, de chacun des films A, B et C.

Au moyen d'échantillons des trois laminés ainsi préparés, on réalise ensuite des joints par thermoscellage, en mettant la face prétraitée des films A, B et C en contact avec les films suivants:

— un film de chlorure de polyvinyle rigide d'une épaisseur de 150 μm;
— un film d'un copolyester rigide (Lustro de KODAK C°) d'une épaisseur de 100 μm;
— un film de polyamide 6 d'une épaisseur de 40 μm.

On mesure la force nécessaire pour la séparation (force de pelage en grammes par centimètre de largeur de joint) des joints thermoscellés formés à différentes températures de scellage (pression de scellage=13,8 N/cm$^2$; temps de scellage=1 seconde).

6

Au tableau I, on donne les résultats obtenus pour les joints formés avec le film A non conforme à l'invention.

Au tableau II, on donne les résultats obtenus pour les joints formés avec le film B conforme à l'invention.

Au tableau III, on trouve les résultats obtenus pour les joints formés avec le film C conforme à l'invention.

TABLEAU I

| Joints formés sur film de | Film A (T=40 mN/m) Force de pelage (g/cm) | | |
|---|---|---|---|
| chlorure de polyvinyle | <100 | <100 | <100 |
| polyester | <100 | <100 | <100 |
| polyamide 6 | <100 | <100 | <100 |
| température de scellage (°C) | 140 | 160 | 180 |

TABLEAU II

| Joints formés sur un film de | Film B (T=38 mN/m) Force de pelage (g/cm) | | | | | |
|---|---|---|---|---|---|---|
| polyester | 250 | 270 | 340 | 360 | 360 | 350 |
| polyamide 6 | 400 | 450 | 450 | 450 | 455 | 460 |
| température de scellage (°C) | 130 | 140 | 150 | 160 | 170 | 180 |

TABLEAU III

| Joints formés sur film de | Film C (T=38 mN/m) Force de pelage (g/cm) | | | | | | |
|---|---|---|---|---|---|---|---|
| chlorure de polyvinyle | 380 | 390 | 400 | 440 | 450 | 495 | 490 |
| température de scellage (°C) | 130 | 140 | 150 | 160 | 170 | 180 | 190 |

Ces tableaux montrent que

a) le film A exclusivement en polyéthylène basse densité ne produit que des joints dont la résistance mécanique est absolument insuffisante, bien que la face destinée à la formation du joint possède une tension de surface de 40 millinewtons par mètre.

b) par contre, les films B et C conformes à l'invention, produisent sur des films de chlorure de polyvinyle, de polyester et de polyamide d'excellents joints pelables dans une large gamme de températures de scellage se situant entre 130 et 190°C.

Exemple 2

Dans cet exemple, on fait varier le degré d'intensité du prétraitement par décharge corona et on étudie son incidence sur la résistance mécanique des joints formés respectivement sur un film de chlorure de polyvinyle et sur un film de polyester.

On prépare, par extrusion-soufflage, un film d'une épaisseur de 50 $\mu$m ayant la composition suivante:

67% en poids d'un polyéthylène ayant une densité de 0,923 g/cm³ et un indice de fluidité de 0,3 (Lacqtène 1003 FE);

18% en poids d'un polystyrène de qualité "cristal", ayant un indice de fluidité de 0,6 (Lacqrène 126B);

15% en poids d'un copolymère séquencé styrène-butadiène-styrène contenant 70% en poids d'unités de butadiène et 30% en poids d'unités de styrène et possédant un indice de fluidité de 0,5 (Solprène 416).

Ce film possède une tension de surface (T) de 32 mN/m.

On coupe ce film en quatre morceaux.

Un de ces morceaux est laminé contre un film de polyester de 12 $\mu$m d'épaisseur (film non traité).

Une face des trois autres morceaux est soumise à un prétraitement par décharge corona respectivement avec une intensité différente; sur l'autre face, on lamine un film identique de polyester.

On obtient ainsi quatre laminés dont une face est constituée par un film tel que préparé ci-dessus et qui possède une tension de surface respectivement de 32 mN/m (film non traité), de 35, de 37 et de 45 mN/m.

Au moyen d'échantillons des quatre laminés ainsi préparés, on effectue des essais similaires à ceux décrits dans l'exemple 1 pour déterminer la force de pelage des joints thermoscellés formés à différentes températures d'une part, sur un film de chlorure de polyvinyle rigide d'une épaisseur de 150 μm et d'autre part, sur un film de poly(téréphtalate d'éthylène) rigide (Melinex de I.C.I.) d'une épaisseur de 100 μm.

Au tableau IV, on donne les résultats obtenus pour les joints réalisés sur le film de chlorure de polyvinyle; tandis que dans le tableau V sont rassemblés les résultats obtenus pour les joints réalisés sur le film de polyester.

TABLEAU IV
Joints réalisés sur film de chlorure de polyvinyle.

| Tension de surface (T) de la face ayant servi à la formation du joint en mN/m | Force de pelage (g/cm) | | | | | | | | |
|---|---|---|---|---|---|---|---|---|---|
| 32 | — | — | <100 | <100 | <100 | <100 | <100 | <100 | <100 |
| 35 | 100 | 260 | 271 | 290 | 292 | 300 | 314 | 320 | 316 |
| 37 | 300 | 306 | 336 | 350 | 390 | 400 | 413 | 417 | 420 |
| 45 | 310 | 340 | 365 | 370 | 410 | 410 | 425 | 420 | 450 |
| température de scellage (°C) | 120 | 130 | 140 | 150 | 160 | 170 | 180 | 190 | 200 |

TABLEAU V
Joints réalisés sur film de polyester.

| Tension de surface (T) de la face ayant servi à la formation du joint en mN/m | Force de pelage (g/cm) | | | | | | | | |
|---|---|---|---|---|---|---|---|---|---|
| 32 | — | — | <100 | <100 | <100 | <100 | <100 | <100 | <100 |
| 35 | — | 120 | 260 | 300 | 289 | 310 | 321 | 332 | 360 |
| 37 | 260 | 270 | 320 | 328 | 370 | 390 | 400 | 410 | 412 |
| 45 | 353 | 342 | 377 | 397 | 393 | 408 | 432 | 425 | 456 |
| température de scellage (°C) | 120 | 130 | 140 | 150 | 160 | 170 | 180 | 190 | 200 |

Ces tableaux montrent que:

a) la face du film qui est destinée à la formation du joint doit présenter une tension de surface d'au moins 35 millinewtons par mètre pour obtenir des joints pelables dont la résistance mécanique est suffisante (force de pelage de 300 g/cm ou plus) pour assurer une fermeture hermétique d'un emballage.

b) lorsque la tension de surface est de 35 millinewtons par mètre, il est cependant nécessaire de pratiquer le scellage à des températures se situant entre 170 et 200°C pour obtenir une résistance mécanique suffisante des joints.

c) à partir d'une tension de surface de 37 millinewtons par mètre, on obtient d'excellents joints pelables dans une large gamme de températures de scellage s'échelonnant de 120°C à 200°C, qui est celle couramment utilisée sur les machines d'emballage industrielles classiques.

d) une augmentation de la tension de surface augmente la résistance mécanique des joints formés.

Exemple 3.

Dans cet exemple, la composition du film à joint pelable renferme un copolymère éthylène-acétate de vinyle en tant que constituant (a).

8

# 0 024 270

a) On prépare, par extrusion-soufflage, un film (dénommé ci-après film D) d'une épaisseur de 50 $\mu$m ayant la composition suivante:

67% en poids d'un copolymère éthylène-acétate de vinyle contenant 4% en poids d'acétate de vinyle et possédant un indice de fluidité de 0,5 (Baylon V18 E 464 de BAYER A.G.);
18% en poids d'un polystyrène, de qualité "cristal", ayant un indice de fluidité de 0,6 (Lacqrène 126B);
15% en poids d'un copolymère séquencé styrène-butadiène-styrène contenant 70% en poids d'unités de butadiène et 30% en poids d'unités de styrène (Solprène 416).

On fait passer ce film dans un appareil de traitement par décharge corona en sorte que la tension de surface d'une de ces faces est de 38 mN/m. Cette face du film sera utilisée pour la formation des joints. Sur l'autre face, on lamine, de manière connue en soi, un film de polyester d'une épaisseur de 12 $\mu$m.

b) On opère exactement comme en a), sauf que la composition du film de 50 $\mu$m d'épaisseur est constituée exclusivement par du copolymère éthylène-acétate de vinyle (Baylon V18 E 464). Ce film est dénommé ci-après "film E".

On effectue ensuite des essais similaires à ceux décrits dans l'exemple 1, pour déterminer la force de pelage des joints thermoscellés formés à différentes températures d'une part, sur un film de chlorure de polyvinyle rigide d'une épaisseur de 150 $\mu$m et d'autre part, sur un film de polyacrylonitrile (Barex de STANDARD OIL C°) d'une épaisseur de 150 $\mu$m.

Au tableau VI, on donne les résultats obtenus pour les joints formés avec le film D conforme à l'invention. Quant au tableau VII, il reproduit les résultats obtenus pour les joints formés avec le film E non conforme à l'invention.

TABLEAU VI

| Joints formés sur film de | Film D (T=38 mN/m) Force de pelage (g/cm) | | | | | |
|---|---|---|---|---|---|---|
| chlorure de polyvinyle | 340 | 370 | 410 | 410 | 420 | — |
| polyacrylonitrile | 240 | 290 | 302 | 310 | 315 | 315 |
| température de scellage (°C) | 140 | 150 | 160 | 170 | 180 | 190 |

TABLEAU VII

| Joints formés sur film de | Film E (T=38 mN/m) Force de pelage (g/cm) | | | | | | |
|---|---|---|---|---|---|---|---|
| chlorure de polyvinyle | 220 | 260 | 270 | 290 | 290 | 300 | 320 |
| température de scellage (°C) | 140 | 150 | 160 | 170 | 180 | 190 | 200 |

Ces tableaux montrent que:

a) le film D, conforme à l'invention, produit d'excellents joints, tant sur des films de chlorure de polyvinyle que sur des films de polyacrylonitrile; toutefois, sur les films de polyacrylonitrile, il faut utiliser dans températures de scellage plus élevées (de 160 à 190°C) pour que la résistance mécanique des joints soit suffisante (force de pelage de 300 g/cm ou plus).

b) le film E (non conforme à l'invention) ne contenant que le constituant (a), produit des joints dont la résistance est insuffisante, malgré que la face destinée à la formation du joint possède une tension de surface de 38 millinewtons par mètre. On constate en effet que la force de pelage dépasse seulement 300 g/cm lorsque la température de scellage est comprise dans l'intervalle de 190—200°C. Or, cet intervalle de température est beaucoup trop étroit pour la réalisation pratique des joints. Il en résulte que pour obtenir des joints suffisamment solides, il est nécessaire d'exercer un contrôle rigoureux et constant de la température de scellage, ce qui constitue un inconvénient sérieux.

On notera que dans cet exemple, on a utilisé un film de polyacrylonitrile, obtenu à partir d'un mélange d'un copolymère acrylonitrile-acrylate de méthyle avec un copolymère élastomère acrylonitrile-butadiène (Barex). Toutefois, on observe les mêmes résultats avec des films préparés à partir d'autres polymères d'acrylonitrile, tels que le film vendu sous le nom de Lopac par MONSANTO CHEMICAL C° ou celui mis sur le marché sous le nom de Cycopac par BORG WARNER et qui sont tous deux préparés à partir d'un copolymère acrylonitrile-styrène.

Exemple 4.

Dans cet exemple, on montre qu'un film conforme à l'invention permet de produire des joints pelables sur une gamme étendue de films d'emballage.

Le film soumis aux essais a la composition suivante:

9

# O 024 270

70% en poids d'un polyéthylène ayant une densité de 0,923 g/cm³ et un indice de fluidité de 0,3 (Lacqtène 1003 FE);

15% en poids d'un polystyrène ayant un indice de fluidité de 0,6 (Lacqrène 126B);

15% en poids d'un copolymère séquencé styrène-butadiène-styrène contenant 70% en poids d'unités de butadiène et 30% en poids d'unités de styrène et possédant un indice de fluidité de 0,5 (Solprène 416). Epaisseur du film: 50 $\mu$m.

On soumet la face de ce film destinée à la formation du joint à un prétraitement par décharge corona en sorte que cette face possède une tension de surface de 40 mN/m, et on lamine de manière connue en soi, un film de polyester d'une épaisseur de 12 $\mu$m sur l'autre face.

Au moyen d'échantillons du laminé ainsi préparé, on effectue des essais similaires à ceux décrits dans l'exemple 1 pour déterminer la force de pelage des joints thermoscellés formés, à différentes températures, sur différents films de matière plastique (pression de scellage=13,8 N/cm²; temps de scellage=1 seconde).

Les résultats obtenus sont rassemblés dans le tableau VIII:

## TABLEAU VIII

| Joints formés sur un film de | Force de pelage (g/cm) | | | | | | |
|---|---|---|---|---|---|---|---|
| polyéthylène (d=0,918 g/cm³; M.I.=2) (épaisseur: 50 $\mu$m) | — | 220 | 250 | 280 | 300 | 320 | 350 |
| chlorure de polyvinyle rigide (épaisseur: 150 $\mu$m) | 370 | 420 | 430 | 450 | 490 | 500 | 530 |
| polyester (épaisseur: 100 $\mu$m) | 300 | 400 | 400 | 420 | 450 | 500 | 500 |
| polyamide 6 (épaisseur: 40 $\mu$m) | — | 400 | 450 | 450 | 450 | 450 | — |
| polypropylène (M.I.=6) (épaisseur: 75 $\mu$m) | — | 450 | 400 | 500 | 480 | 500 | 540 |
| température de scellage (°C) | 120 | 130 | 140 | 150 | 160 | 170 | 180 |

Ce tableau montre qu'il est aisé de former des joints pelables avec le film conforme à l'invention,

— à différentes températures de scellage,
— sur les films d'emballage les plus divers.

Il est à noter en outre que la pression de scellage et le temps de scellage ne sont pas critiques. En effet, on a pu réaliser des joints pelables en faisant varier la pression de scellage de 13,8 N/cm² à 41,4 N/cm² et le temps de scellage de 0,5 à 2 s, le temps de scellage étant inversement proportionnel à la pression de scellage.

A titre d'exemples non limitatifs d'emballages pouvant être réalisés avec le film conformé à l'invention, on peut citer:

— emballages destinés à des plats cuisinés pouvant être réchauffés dans des fours à microondes, constitués d'une part, par une partie inférieure en forme de barquette réalisée en carton fort d'environ 400 micromètres d'épaisseur revêtu d'un film de poly(téréphtalate d'éthylène) de 20 micromètres d'épaisseur et d'autre part, d'un couvercle composé d'un film de polyamide de 40 micromètres d'épaisseur laminé sur un film conforme à l'invention. Pour ce dernier, on utilise avantageusement le film préparé à l'exemple 4 qui produit un excellent joint pelable par thermoscellage lorsqu'on met sa face prétraitée en contact avec le film de poly(téréphtalate d'éthylène) de la partie inférieure;

— emballages d'articles médicaux tels que seringues devant être stérilisés aux rayons gamma, constitués d'une part, d'un film d'un copolyester rigide (Kodar A 150 de KODAK C°) d'environ 100 micromètres d'épaisseur et d'autre part, d'un film de recouvrement composé d'un film de poly(téréphtalate d'éthylène) biorienté de 12 micromètres d'épaisseur laminé sur un film conforme à l'invention. Pour ce dernier, on utilise également avantageusement le film préparé à l'exemple 4 qui produit un joint pelable parfait par thermoscellage lorsqu'on met sa face prétraitée en contact avec le film de copolyester rigide;

— emballages pour aliments divers tels que biscuits, constitués d'une part, d'un film de chlorure de polyvinyle rigide d'une épaisseur de 150 micromètres et d'autre part, d'un film conforme à l'invention laminé contre un film de cellulose régénérée de 32 micromètres d'épaisseur verni au chlorure de polyvinylidène. Comme film conforme à l'invention, on choisit de préférence le film transparent

10

# 0 024 270

de l'exemple 2, dont la face prétraitée produit un joint pelable parfait avec le film de chlorure de polyvinyle rigide.

## Revendications

1. Film d'emballage thermoscellable préparé à partir d'un polymère d'éthylène, d'un polystyrène et d'un polymère caoutchouteux, caractérisé par une composition comprenant:

(a) 55 à 90% en poids d'au moins un polymère d'éthylène choisi parmi du polyéthylène ayant une densité comprise entre 0,91 et 0,93 g/cm$^3$ et un copolymère éthylène-acétate de vinyle contenant au plus 10% en poids d'acétate de vinyle,

(b) 5 à 30% en poids d'un homopolymère de styrène et

(c) 5 à 20% en poids d'un copolymère séquencé styrène-butadiène-styrène ou styrène-isoprène-styrène élastomère thermoplastique, et par le fait que l'une des faces du film possède une tension de surface comprise entre 35 et 50 millinewtons par mètre.

2. Film d'emballage selon la revendication 1, caractérisé en ce que l'une des faces du film possède une tension de surface comprise entre 37 et 45 millinewtons par mètre.

3. Film d'emballage selon l'une quelconque des revendications 1 et 2, caractérisé en ce que la quantité du constituant (a) représente 65 à 85% en poids, la quantité du constituant (b) représente 10 à 20% en poids et la quantité du constituant (c) représente 5 à 15% en poids, par rapport au poids total des polymères présents.

4. Film d'emballage selon l'une quelconque des revendications 1 à 3, caractérisé en ce qu'il contient en outre jusqu'à 10% en poids de charges et jusqu'à environ 5% en poids d'adjuvants pour films d'emballage, par rapport au poids total des constituants polymères (a), (b) et (c).

5. Procédé de préparation d'un film d'emballage thermoscellable, caractérisé en ce que l'on soumet à une extrusion une composition telle que définie à la revendication 1, et en ce que l'on soumet l'une des faces du film ainsi extrudé à un prétraitement par décharge corona avec une intensité telle que sa tension de surface soit comprise entre 35 et 50 millinewtons par mètre.

6. Procédé selon la revendication 5, caractérisé en ce que l'on soumet l'une des faces du film à un prétraitement par décharge corona, avec une intensité telle que sa tension de surface soit comprise entre 37 et 45 millinewtons par mètre.

7. Procédé selon l'une quelconque des revendications 5 et 6, caractérisé en ce que la composition soumise à l'extrusion est celle définie à la revendication 3.

8. Procédé selon l'une quelconque des revendications 5 à 7, caractérisé en ce que la composition soumise à l'extrusion est celle définie à la revendication 4.

9. Procédé selon l'une quelconque des revendications 5 à 8, caractérisé en ce que l'on lamine le film extrudé contre au moins un film de nature différente pour obtenir un laminé, dont l'une au moins des faces est constituée par ledit film extrudé et en ce que l'on soumet ladite face au prétraitement par décharge corona.

10. Emballages réalisés à partir de ou comprenant un film selon l'une quelconque des revendications 1 à 4.

## Patentansprüche

1. Heisssiegelbare Verpackungsfolie hergestellt aus einem Äthylenpolymer, einem Polystyrol und einem kautschukartigen Polymer, gekennzeichnet durch eine Zusammensetzung enthaltend:

(a) 55 bis 90 Gew.-% mindestens eines Äthylenpolymers ausgewählt aus Polyäthylen mit einer Dichte zwischen 0,91 und 0,93 g/cm$^3$ und einem Vinylacetat-Äthylen-Copolymer enthaltend höchstens 10 Gew.-% Vinylacetat,

(b) 5 bis 30 Gew.-% eines Styrol-Homopolymers und

(c) 5 bis 20 Gew.-% eines thermoplastischen, elastomeren Styrol-Butadien-Styrol-Blockcopolymers oder Styrol-Isopren-Styrol-Blockcopolymers, sowie dadurch, dass eine der Seiten der Folie eine Oberflächenspannung zwischen 35 und 50 mN/m besitzt.

2. Verpackungsfolie nach Anspruch 1, dadurch gekennzeichnet, dass eine der Seiten der Folie eine Oberflächenspannung zwischen 37 und 45 mN/m besitzt.

3. Verpackungsfolie nach irgendeinem der Ansprüche 1 und 2, dadurch gekennzeichnet, dass die Menge des Bestandteils (a) 65 bis 85 Gew.-%, die Menge des Bestandteiles (b) 10 bis 20 Gew.-% und die Menge des Bestandteiles (c) 5 bis 15 Gew.-% in bezug auf das Gesamtgewicht der vorhandenen Polymeren darstellt.

4. Verpackungsfolie nach irgendeinem der Ansprüche 1 bis 3, dadurch gekennzeichnet, dass sie zudem bis zu 10 Gew.-% Füllstoffe und bis zu ca. 5 Gew.-% Zusatzstoffe für Verpackungsfolien in bezug auf das Gesamtgewicht der Polymerbestandteile (a), (b) und (c) enthält.

5. Verfahren zer Herstellung einer heisssiegelbaren Verpackungsfolie, dadurch gekennzeichnet, dass man eine Zusammensetzung, wie sie in Anspruch 1 definiert ist, extrudiert und eine der Seiten der so extrudierten Folie einer Vorbehandlung mittels Koronaentladung mit einer solchen Intensität unterwirft, dass ihre Oberflächenspannung zwischen 35 und 50 mN/m liegt.

11

6. Verfahren nach Anspruch 5, dadurch gekennzeichnet, dass man eine der Seiten der Folie einer Vorbehandlung mittels Koronaentladung mit einer solchen Intensität unterwirft, dass ihre Oberflächenspannung zwischen 37 und 45 mN/m liegt.

7. Verfahren nach irgendeinem der Ansprüche 5 und 6, dadurch gekennzeichnet, dass die zu extrudierende Zusammensetzung die in Anspruch 3 definierte ist.

8. Verfahren nach irgendeinem der Ansprüche 5 bis 7, dadurch gekennzeichnet, dass die zu extrudierende Zusammensetzung die in Anspruch 4 definierte ist.

9. Verfahren nach irgendeinem der Ansprüche 5 bis 8, dadurch gekennzeichnet, dass man die extrudierte Folie auf wenigstens eine Folie unterschiedlicher Natur aufkaschiert, um eine Verbundfolie zu erhalten, von der mindestens eine der Seiten von der genannten extrudierten Folie gebildet ist und dass man diese Seite der Vorbehandlung mittels Koronaentladung unterwirft.

10. Verpackungen, hergestellt aus einer oder enthaltend eine Folie nach irgendeinem der Ansprüche 1 bis 4.

## Claims

1. Heat-sealable packaging film prepared from an ethylene polymer, a polystyrene and a rubbery polymer, characterised by a composition comprising:

(a) 55 to 90% by weight of at least one ethylene polymer selected from polyethylene having a density of from 0.91 to 0.93 g/cm$^3$ and an ethylene-vinyl acetate copolymer containing at most 10% by weight of vinyl acetate,

(b) 5 to 30% by weight of a styrene homopolymer and

(c) 5 to 20% by weight of a thermoplastic, elastomeric styrene-butadiene-styrene or styreneisoprene-styrene block copolymer, and further in that one of the faces of the film has a surface tension of from 35 to 50 millinewtons per metre.

2. Packaging film according to claim 1, characterised in that one of the faces of the film has a surface tension of from 37 to 45 millinewtons per metre.

3. Packaging film according to any of claims 1 and 2, characterised in that the amount of constituent (a) represents 65 to 85% by weight, the amount of constituent (b) represents 10 to 20% by weight and the amount of constituent (c) represents 5 to 15% by weight, referred to the total weight of the polymers present.

4. Packaging film according to any of claims 1 to 3, characterised in that it additionally contains up to 10% by weight of fillers and up to about 5% by weight of adjuvants for packaging films, referred to the total weight of the polymer constituents (a), (b) and (c).

5. Process for the preparation of a heat-sealable packaging film, characterised in that a composition as defined in claim 1 is subjected to extrusion and in that one of the faces of the film thus extruded is subjected to a corona discharge pretreatment with an intensity which is such that its surface tension is from 35 to 50 millinewtons per metre.

6. Process according to claim 5, characterised in that one of the faces of the film is subjected to a corona discharge pretreatment with an intensity which is such that its surface tension is from 37 to 45 millinewtons per metre.

7. Process according to any of claims 5 and 6, characterised in that the composition subjected to extrusion is that defined in claim 3.

8. Process according to any of claims 5 to 7, characterised in that the composition subjected to extrusion is that defined in claim 4.

9. Process according to any of claims 5 to 8, characterised in that the extruded film is laminated to at least one film of a different nature to obtain a laminate, at least one the faces of which is constituted of the said extruded film and in that said face is subjected to the corona discharge pretreatment.

10. Packages made from or comprising a film according to any of claims 1 to 4.